# FASCICULE DE BREVET EUROPEEN

(11) **EP 0 663 308 B1**
(45) Date de publication et mention de la délivrance du brevet: **10.06.1998**
(21) Numéro de dépôt: 94403039.4
(22) Date de dépôt: 27.12.1994
(51) Int. Cl.: B60G 17/015

(54) **Dispositif de suspension pour véhicule automobile**
Radaufhängung für ein Kraftfahrzeug
Suspension for a motor vehicle

(30) Priorité: 17.01.1994 FR 9400434
(43) Date de publication de la demande: 19.07.1995
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy le Roi (FR)
(74) Mandataire: Thinat, Michel

(56) Documents cités:
- EP-A- 0 139 144
- EP-A- 0 191 932
- EP-A- 0 444 981
- DE-A- 3 500 601
- FR-A- 2 663 100
- FR-A- 2 665 669

## Description

La présente invention concerne un dispositif de suspension pour véhicule automobile.

On connaît des dispositifs de suspension dite hydroactive selon lesquels l'élément porteur de chaque roue du véhicule est en liaison avec un ressort pneumatique dont les caractéristiques définissent un état de raideur relativement grande de suspension ou état ferme. Un second ressort pneumatique peut être mis en communication avec le premier ressort pneumatique pour déterminer un état de raideur de suspension plus réduite ou état de raideur souple.

Le document FR-A-2 665 669 décrit un dispositif de suspension pour véhicule automobile comprenant les caractéristiques techniques énoncées dans le préambule de la revendication 1.

Cependant, ces dispositifs de suspension connus conduisent à une structure de suspension complexe et encombrante.

Le document EP-A-0 139 144 décrit un dispositif de suspension pour véhicule automobile, dans lequel un actionneur, destiné à changer la caractéristique de la suspension, est d'une structure miniaturisée et simplifiée. Cependant, ce dispositif connu ne permet pas de simplifier un dispositif de suspension du genre décrit dans le préambule de la revendication 1.

La présente invention a pour but d'éliminer l'inconvénient ci-dessus des dispositifs connus en proposant un dispositif de suspension pour véhicule automobile comprenant les caractéristiques définies dans la partie caractérisante de la revendication 1.

Le moyen d'actionnement du clapet comprend un poussoir traversant la paroi de fond du bloc hydro-pneumatique et coulissant dans un corps solidaire du bloc et une membrane déroulable reliée au poussoir en définissant dans le corps une chambre reliée hydrauliquement à l'électro-vanne précitée.

L'amortisseur comprend deux éléments amortisseurs en série et le tiroir de commutation est agencé de façon à permettre le passage de liquide d'amortissement entre le vérin de suspension et le bloc hydro-pneumatique, par l'intermédiaire de conduits appropriés, à travers les deux éléments amortisseurs ou seulement l'un d'entre eux suivant l'état d'amortissement sélectionné de l'amortisseur.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels.

La figure 1 représente le schéma du circuit hydraulique associé au dispositif de suspension conforme à l'invention.

La figure 2 est une vue agrandie en coupe d'une partie du dispositif de suspension de l'invention.

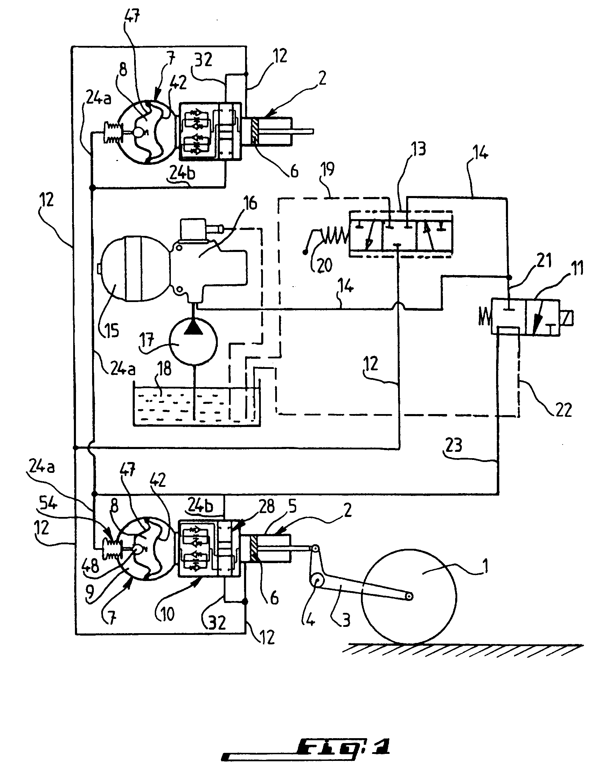

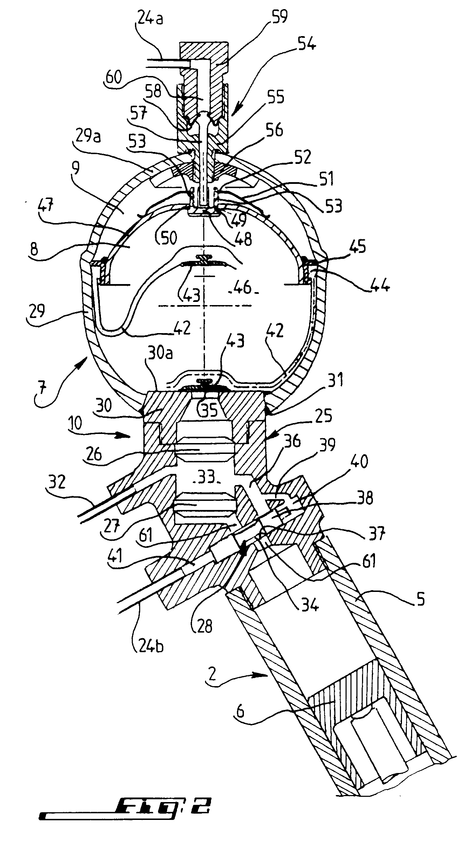

En se reportant aux figures 1 et 2, le dispositif de suspension pour véhicule automobile comprend, pour relier chaque roue arrière 1 à la caisse du véhicule, un élément porteur 2 relié à la roue 1 par l'intermédiaire d'un bras 3 articulé en 4 au châssis du véhicule et comprenant un cylindre 5 solidaire du châssis, dans lequel coulisse un piston 6 relié de façon articulée au bras 3 ; un bloc hydro-pneumatique 7 contenant un ressort pneumatique 8 pouvant être mis en communication avec un volume auxiliaire de gaz 9 afin de réduire la raideur de suspension comme cela sera décrit ultérieurement ; et un bloc d'amortissement réglable 10 pouvant occuper l'un des deux états d'amortissement respectivement moyen et fort sous l'action d'une électro-vanne 11 comme cela sera également expliqué ultérieurement.

Chaque élément porteur 2 est relié, par l'intermédiaire d'une tuyauterie 12, à un moyen correcteur de hauteur 13, connu en soi, qui reçoit deux autres tuyauteries, l'une 14 d'alimentation liquide hydraulique provenant d'un accumulateur principal 15 dont la pression est régulée par un ensemble conjoncteur-disjoncteur 16 alimenté par une pompe 17 aspirant le liquide hydraulique contenu dans un réservoir 18, et l'autre 19 de retour de liquide hydraulique au réservoir 18. Le moyen correcteur de hauteur 13 est actionné par une commande mécanique 20 qui comprend des moyens élastiques et prenant le mouvement d'une barre antidevers (non représentée) de préférence au milieu de celle-ci afin d'accomplir la correction usuelle de hauteur pour chaque train de roues.

L'électro-vanne 11 est reliée à l'ensemble conjoncteur-disjoncteur 16 par une conduite 21 raccordée à la tuyauterie d'alimentation 14 du moyen correcteur de hauteur 13 et au réservoir hydraulique 18 par une tuyauterie 22. Une tuyauterie 23 relie l'électro-vanne 11 aux deux blocs hydro-pneumatiques 7 et aux deux blocs d'amortissement réglables 10 respectivement par des conduites 24a et 24b.

Le bloc d'amortissement réglable 10 comprend un corps 25 reliant l'élément porteur ou vérin de suspension 2 au bloc hydro-pneumatique 7 et dans lequel sont agencés l'amortisseur à deux éléments amortisseurs 26, 27 disposés en série et un tiroir 28 de commutation de l'état, moyen ou fort, de l'amortisseur. Le corps 25 du bloc 10 est fixé d'une part sur l'élément porteur 2 par vissage et d'autre part à une enveloppe métallique 29 du bloc 7 par l'intermédiaire d'un embout 30 solidaire du corps 25 et sur lequel est soudée électriquement en 31 l'enveloppe métallique 29, qui est emboutie à partir d'un flan métallique circulaire. Une conduite 32 est raccordée au corps 25 du bloc 10 et à la tuyauterie 12 de manière à mettre en communication le moyen correcteur de hauteur 13 et une chambre 33 délimitée dans le corps 25 par les deux éléments amortisseurs 26, 27 qui procurent des passages restreints de liquide d'amortissement respectivement vers le cylindre 5 de l'élément porteur 2 par une gorge 34 du tiroir 28 et vers le bloc hydro-pneumatique 7 par un orifice 35 réalisé dans l'embout 30 du corps 25. La chambre 33 communique par un conduit interne 36 avec l'alésage 37 du corps 25 dans lequel coulisse le tiroir 28 dont une portée 38 est susceptible d'obturer le passage de liquide du conduit interne 36 vers le cylindre 5 de l'élément porteur 2. Un conduit interne 39 relie le conduit interne 36 à une chambre 40 réalisée dans le prolongement de l'alésage 37 de façon à amener la pression de suspension dans la chambre 40. La conduite 24b est raccordée au corps 25 du bloc 10 de façon à amener le liquide hydraulique haute pression de l'électro-vanne 11 dans une chambre 41 réalisée dans le corps 25 en prolongement de l'alésage 37 à l'opposé de la chambre 40 de façon à assurer le retour du liquide hydraulique de la chambre 41 au réservoir 18 à travers l'électro-vanne 11.

Le bloc hydro-pneumatique 7 comprend une membrane 42, de préférence en matière élastomère, imperméable au gaz (azote) contenu dans la chambre 8 formant le ressort pneumatique du bloc 7 et sur laquelle est surmoulé un élément formant clapet 43 pouvant obturer l'orifice 35 de l'embout 30. L'élément formant clapet 43 est réalisé en matière plastique dure de façon à éviter l'extrusion de la membrane 42 dans l'orifice 35 quand celle-ci repose sur la face 30a de l'embout 30. La membrane 42 comporte un bourrelet annulaire 44 fixé par serrage entre une partie de l'enveloppe métallique 29 du bloc 7 et une bague annulaire de maintien 45 de façon à assurer l'étanchéité entre le gaz (azote) dans la chambre 8 et le liquide hydraulique contenu dans la chambre 46 définie entre la membrane 42 et la partie de l'enveloppe métallique 29 soudée à l'embout 30. Une cloison métallique rigide 47 de forme hémisphérique est fixée de façon étanche par brasage sur la bague de maintien 45 afin de délimiter les deux chambres 8 et 9 formant respectivement le ressort pneumatique et le volume auxiliaire de gaz du bloc 7. Le volume auxiliaire de gaz est contenu ainsi dans le bloc 7 entre la cloison rigide 47 et une paroi de fond 29a de l'enveloppe 29. Un clapet 48 en matière plastique armé est monté coulissant dans un orifice 49 de la cloison 47 et constitue un moyen d'obturation pouvant mettre en communication les deux chambres 8 et 9. Le clapet 48 est de forme générale cylindrique ayant un épaulement 50 normalement en appui sur la face de la cloison 47 du côté de la chambre 8 sous l'action d'un ressort à lame à six branches 51 encliquetées dans des crans 52 de quatre branches 53 de la partie cylindrique du clapet 48 située dans la chambre 9. Les extrémités des branches du ressort 51 opposées à celles fixées aux branches 53 du clapet 48 sont en appui sur la face de la cloison 47 située du côté de la chambre 9. Ainsi, le clapet 48 est normalement maintenu par le ressort 51 en position de rappel d'obturation de l'orifice 49. Une fois tous les éléments internes du bloc 7 montés dans celui-ci, l'enveloppe 29 est refermée sur l'embout 30 et fixée à celui-ci par soudage comme déjà expliqué.

Le clapet 48 est commandé par un moyen d'actionnement 54 comprenant un corps 55 fixé à l'enveloppe 29 du bloc 7 par vissage dans un écrou 56 fixé par soudage électrique sous la paroi de fond hémisphérique 29a de l'enveloppe 29. Le moyen d'actionnement comporte de plus un élément formant poussoir en forme de tige 57 monté coulissant dans le corps 55 en traversant la paroi 29a pour agir sur le clapet 48 et une membrane déroulable 58 fixée en son centre à l'élément formant poussoir 57 et maintenue à sa périphérie entre le corps 55 et un autre corps 59 solidaire par vissage du corps 55. La membrane déroulable 58 définit avec l'élément formant poussoir 57 une chambre 60 dans le corps 59 et reliée hydrauliquement à l'électro-vanne 11 par l'intermédiaire de la conduite 24a et de la tuyauterie 23.

Ainsi, l'électro-vanne 11 est reliée hydrauliquement à la fois au clapet 48 formant moyen d'obturation de l'orifice 49 de passage de gaz entre les chambres 8 et 9 et au tiroir 28 de commutation de l'état de l'amortisseur du bloc 10.

Le fonctionnement du dispositif de suspension résulte déjà de la description qui en a été faite ci-dessus et va être maintenant expliqué.

Pour obtenir un état de raideur grande de suspension, l'électro-vanne 11 n'est pas excitée comme représenté en figure 1 de sorte que la chambre 60 du moyen d'actionnement 54 du clapet 48 communique avec le réservoir 18 par l'intermédiaire de la conduite 24a et des tuyauteries 23 et 22. Sous la pression du gaz (azote) dans la chambre formant ressort pneumatique 8, l'épaulement 50 du clapet 48 est plaqué de façon étanche sur la cloison 47 pour obturer l'orifice 49 de sorte que la raideur de suspension est définie par le volume de la chambre 8. Le tiroir 28, sous l'action de la pression de suspension dans la chambre 40, est plaqué vers la chambre 41 comme représenté en figure 2 pour ouvrir un conduit interne 61 du corps 25 communiquant avec l'élément porteur 2 de façon que le liquide de suspension venant de l'élément porteur 2 se dirige vers le bloc pneumatique 7 ou inversement en traversant les deux éléments amortisseurs 26, 27, la gorge 34 du tiroir 28 et le conduit 61, procurant ainsi un amortissement relativement fort simultanément avec l'état de raideur relativement grande de suspension.

Pour obtenir l'état de raideur réduite de suspension, l'électro-vanne 11 est excitée de façon que le liquide hydraulique haute pression arrive dans la chambre 60 du moyen d'actionnement 54. La pression de liquide dans cette chambre est telle que la membrane 58 se déroule, entraînant l'élément formant poussoir 57 qui commande le déplacement du clapet 48 à l'encontre de la force de rappel du ressort 51, ouvrant ainsi l'orifice 49. Les deux chambres 8 et 9 sont alors en communication de sorte que la raideur réduite de suspension est définie par la somme des volumes de gaz respectifs de ces chambres. Simultanément, l'électro-vanne excitée 11 provoque le déplacement du tiroir 28 sous l'action de la haute pression du liquide hydraulique parvenant dans la chambre 41 par l'intermédiaire de la conduite 24b et des tuyauteries 23 et 14 de façon à obturer le conduit interne 61 et ouvrir le conduit interne 36. Le liquide de suspension circulant entre l'élément porteur 2 et le bloc pneumatique 7 ne traverse alors plus que l'élément amortisseur 26, procurant ainsi un état d'amortissement moyen de l'amortisseur du bloc 10.

Bien entendu, les deux états de raideur et d'amortissement obtenus simultanément comme décrits ci-dessus à chaque condition de roulage du véhicule sont mis en service automatiquement, en fonction de certains critères de roulage tels que la vitesse du véhicule, l'angle de braquage du volant de direction, l'accélération, le freinage et/ou le débattement de caisse du véhicule, par un logiciel adapté à traiter les signaux émis par différents capteurs placés sur le véhicule et relatifs à ces critères de roulage. Les quatre roues du véhicule peuvent être traitées simultanément ou séparément par ce logiciel. De plus, le circuit hydraulique de la figure 1 peut être appliqué aux quatre roues du véhicule pour les traiter simultanément.

Le dispositif de suspension conforme à l'invention permet une simplification de structure considérable par rapport aux dispositifs de suspension connus jusqu'à maintenant tout en étant plus compact que ceux-ci.

## Revendications

1. Dispositif de suspension pour véhicule automobile comprenant, pour relier au moins une roue (1) à la caisse du véhicule, d'une part un ressort pneumatique (8) susceptible d'être mis en communication par un moyen d'obturation (48) avec un volume auxiliaire de gaz (9) afin de réduire la raideur de suspension, et d'autre part un amortisseur (26, 27) pouvant occuper l'un de deux états respectivement moyen et fort sous l'action d'une électro-vanne (11), l'état moyen d'amortissement étant réalisé en même temps que la raideur réduite de suspension, l'électro-vanne (11) de commande de l'amortisseur (26, 27) étant reliée hydrauliquement à un tiroir (28) de commutation de l'état de l'amortisseur (26, 27), ce dernier et le tiroir de commutation (28) étant agencés dans un même corps (25) reliant un vérin de suspension (2) d'une roue (1) à un bloc hydro-pneumatique (7) contenant le ressort pneumatique (8), caractérisé en ce que l'électro-vanne (11) est également reliée hydrauliquement au moyen d'obturation (48) et est pilotée de façon à réaliser simultanément l'état moyen d'amortissement et la raideur réduite de suspension ou l'état fort d'amortissement et la raideur élevée de suspension, en ce que le volume auxiliaire de gaz est contenu dans une chambre (9) définie dans le bloc hydro-pneumatique (7) entre une paroi de fond (29a) du bloc (7) et une cloison rigide étanche (47) la séparant de la chambre de gaz (8) constituant le ressort pneumatique, et en ce que le moyen d'obturation comprend un clapet (48) commandé par un moyen d'actionnement (54) piloté par l'électro-vanne (11) de façon à obturer ou ouvrir une ouverture (49) de la cloison (47) séparant les deux chambres (8,9).

2. Dispositif selon la revendication 1, caractérisé en ce que le moyen d'actionnement (54) précité comprend un poussoir (57) traversant la paroi de fond (29a) du bloc hydro-pneumatique (7) et coulissant dans un corps (55) solidaire du bloc (7) et une membrane déroulable (58) reliée au poussoir (57) en définissant dans le corps (55) une chambre (60) reliée hydrauliquement à l'électro-vanne (11) précitée.

3. Dispositif selon la revendication 1 ou 2, caractérisé en ce que l'amortisseur précité comprend deux éléments amortisseurs (26, 27) en série, et le tiroir de commutation (28) est agencé de façon à permettre le passage de liquide entre le vérin de suspension (2) et le bloc hydro-pneumatique (7), par l'intermédiaire de conduits appropriés (61, 35 ;36, 35) à travers les deux éléments amortisseurs (26, 27) ou seulement l'un d'entre eux (26) suivant l'état d'amortissement sélectionné de l'amortisseur (26, 27).

## Claims

1. Suspension device for an automotive vehicle comprising, for connecting at least one wheel (1) to the body of the vehicle, on the one hand a pneumatic spring (8) adapted to be put in communication through a closure means (48) with an auxiliary gas volume (9) in order to reduce the suspension stiffness and on the other hand a damper (26, 27) adapted to assume one of the two medium and strong states, respectively, under the action of an electromagnetic valve (11), the medium damping state being provided at the same time as the reduced suspension stiffness, the electro-magnetic valve (11) for the control of the damper (26, 27), being hydraulically connected to a spool (28) for the switching of the state of the damper (26, 27) the latter and the switching spool (28) being arranged in a same body (25) connecting a jack (2) for the suspension of one wheel (1) to a hydropneumatic block (7) containing the pneumatic spring (8) characterized in that the electromagnetic valve (11) is also hydraulically connected to the closure means (48) and is controlled so as to simultaneously provide the medium damping state and the reduced suspension stiffness or the strong damping state and the high suspension stiffness, in that the auxiliary gas volume is contained within a chamber (9) defined in the hydropneumatic block (7) between an endwall (29a) of the block (7) and a fluid-tight rigid partition (47) separating it from the gas chamber (8) constituting the pneumatic spring and in that the closure means comprises a valve member (48) operated by an actuating means (54) controlled by the electromagnetic valve (11) so as to close or to open one aperture (49) of the partition (47) separating both chambers (8,9).

2. Device according to claim 1, characterized in that the aforesaid actuating means (54) comprises a push-rod (57) extending through the end wall (29a) of the hydropneumatic block (7) and sliding in a body (55) made fast to the block (7) and an unrollable membrane (58) connected to the push-rod (57) while defining within the body (55) a chamber (60) hydraulically connected to the aforesaid electromagnetic valve (11).

3. Device according to claim 1 or 2, characterized in that the aforesaid damper comprises two damping elements (26, 27) arranged in series and the switching spool (28) is arranged so as to allow the passage of liquid between the suspension jack (2) and the hydropneumatic block (7) through the medium of suitable ducts (61,35; 36, 35) through both damping elements (26, 27) or only one (26) thereof according to the selected damping state of the damper (26, 27).

## Patentansprüche

1. Aufhängungsvorrichtung für ein Kraftfahrzeug mit, um wenigstens ein Rad (1) mit dem Fahrzeugkasten zu verbinden, einerseits einer pneumatischen Feder (8), die fähig ist, durch ein Verschlussmittel (48) mit einem Hilfsgasvolumen (9) in Verbindung gesetzt zu werden, um die Aufhängungssteifheit zu vermindern und andererseits einem Stossdämpfer (26, 27), der einen der beiden Zustände, die jeweils einem mittleren und einem starken Zustand entsprechen, unter der Wirkung eines Elektroventils (11) einnehmen kann, wobei der mittlere Dämpfungszustand zu selber Zeit wie die verminderte Aufhängungssteifheit bewirkt wird, wobei das Elektroventil (11) zur Steuerung des Stossdämpfers (26, 27) mit einem Schieber (28) zur Umschaltung des Zustandes des Stossdämpfers (26,27) hydraulisch verbunden ist, wobei dieser letztere und der Schaltschieber (28) in einem einen Aufhängungskraftzylinder (2) eines Rades (1) mit einem die pneumatischen Feder (8) enthaltenden hydropneumatischen Block (7) verbindenden selben Körper (25) angeordnet sind, dadurch gekennzeichnet, dass das Elektroventil (11) ebenfalls mit dem Verschlussmittel (48) hydraulisch verbunden ist und derart gesteuert wird, um gleichzeitig den mittleren Dämpfungszustand und die verminderte Aufhängungssteifheit oder den starken Dämpfungszustand und die hohe Aufhängungssteifheit zu gewährleisten, dass das Hilfgasvolumen in einer in dem hydropneumatischen Block (7) zwischen einer Endwand (29a) des Blockes (7) und einer dieselbe von der die pneumatische Feder bildenden Gaskammer (8) trennenden dichten steifen Trennwand (47) abgegrenzten Kammer (9) enthalten ist, und dass das Verschlussmittel ein durch ein durch das Elektroventil (11) gesteuertes Betätigungsmittel (54) betätigtes Ventilglied (48) aufweist, um eine Öffnung (49) der die beiden Kammern (8,9) trennenden Trennwand (47) zu verschliessen oder zu öffnen.

2. Vorrichtung nach Anspruch 1, dadurch gekennzeichnet, dass das vorgenannte Betätigungsmittel (54) einen die Endwand (29a) des hydropneumatischen Blocks (7) durchsetzenden und in einem mit dem Block (7) fest verbundenen Körper (55) gleitenden Stössel (57) und eine mit dem Stössel (57) verbundene abrollbaren Membran (58) unter Abgrenzung einer mit dem vorgenannten Elektroventil (11) hydraulisch verbundenen Kammer (60) in dem Körper (55) aufweist.

3. Vorrichtung nach Anspruch 1 oder 2, dadurch gekennzeichnet, dass der vorgenannte Stossdämpfer zwei dämpfende Elemente (26, 27) in Reihenanordnung umfasst und der Schaltschieber (28) angeordnet ist, um den Durchgang von Flüssigkeit zwischen dem Aufhängungskraftzylinder (2) und dem hydropneumatischen Block (7) übrer geeignete Kanäle (61, 35; 36, 35) durch die beiden dämpfenden Elemente (26, 27) oder nur einen (26) derselben gemäss dem gewählten Dämpfungszustand des Stossdämpfers (26,27) zu gestatten.
